# FASCICULE DE BREVET EUROPEEN

(11) **EP 3 822 515 B1**
(45) Date de publication et mention de la délivrance du brevet: **30.08.2023**
(21) Numéro de dépôt: 20207399.5
(22) Date de dépôt: 13.11.2020
(51) Int. Cl.: F16H 57/04, F01D 25/18, F01D 15/12, F02C 7/36, F02C 7/06

(54) **ROUET POUR UN PORTE-SATELLITES DE REDUCTEUR DE VITESSE À TRAIN EPICYCLOÏDAL DE TURBOMACHINE**
LAUFRAD FÜR EINEN SATELLITENTRÄGER EINES UNTERSETZUNGSGETRIEBES MIT PLANETENGETRIEBE EINES TURBOTRIEBWERKS
IMPELLER FOR A PLANET CARRIER OF A SPEED REDUCER WITH EPICYCLIC GEARSET OF A TURBOMACHINE

(30) Priorité: 15.11.2019 FR 1912784
(43) Date de publication de la demande: 19.05.2021
(73) Titulaire: Safran Transmission Systems, 92700 Colombes (FR)
(72) Inventeur: CHARRIER, Mathieu Jean, 77550 MOISSY-CRAMAYEL (FR); PENNACINO, Antoine Jacques Marie, 77550 MOISSY-CRAMAYEL (FR); DI GIOVANNI, Jean-Charles Michel Pierre, 77550 MOISSY-CRAMAYEL (FR); RAPPAPORT, Florian, 77550 MOISSY-CRAMAYEL (FR)
(74) Mandataire: Gevers & Orès

(56) Documents cités:
- WO-A1-2018/189457
- US-A1- 2013 313 053
- US-A1- 2018 306 293
- US-A1- 2019 032 514
- US-A1- 2019 301 466
- US-B2- 8 911 318

## Description

### Domaine technique de l'invention

La présente invention concerne notamment un rouet pour un porte-satellites d'un réducteur de vitesse à train épicycloïdal de turbomachine.

### Arrière-plan technique

L'état de la technique dans ce domaine comprend notamment les documents FR-A1 -3 036 763, FR-A1 -3 047 279, FR-A1-3 041 054, FR-A1-3 065 773, WO-A1-2015/008000, US-A1-2019/301466, US2013313053A1, US-A1-2018/306293, US-A1-2019/032514, WO-A1-2018/189457, US-B2-8,911,318 et WO-A1-2018/185186.

Un réducteur de vitesse à train épicycloïdal d'une turbomachine d'aéronef comprend classiquement un solaire accouplé à un premier arbre et une couronne s'étendant autour du solaire. Des satellites sont disposés entre le solaire et la couronne et sont engrenés avec eux et portés par un porte-satellites accouplé à un second arbre.

La figure 1 illustre un porte-satellites 10 tel que décrit dans la demande FR-A1-3 036 763. Ce porte-satellites 10 comprend un corps cylindrique 12 destiné à être accouplé au second arbre et relié à une extrémité longitudinale à une paroi annulaire 14 de support d'axes 16 parallèles de rotation des satellites 18. Les axes 16 sont régulièrement répartis autour de l'axe A de rotation du porte-satellites et sont solidaires à l'une de leurs extrémités longitudinales de la paroi annulaire 14 précitée. Un rouet 20 est rapporté et fixé aux extrémités longitudinales opposées des axes 16.

Le rouet 20 est solidaire du porte-satellites 10 du fait de sa liaison aux axes 16 de support des satellites 18. Le rouet 20 est donc destiné à être mis en rotation en fonctionnement autour de l'axe A en étant solidarisé au rotor du réducteur.

Le rouet 20 a une forme générale annulaire autour de l'axe A et comporte à sa périphérie externe des raccords hydrauliques aux axes 16 de rotation des satellites 18. Le rouet 20 comprend des moyens de lubrification, d'une part, des paliers montés entre les axes 16 et les satellites 18, et, d'autre part, des dents d'engrènement des satellites 18 et du solaire 22. Ces moyens de lubrification comportent une gorge annulaire 24 située à la périphérie interne du rouet 20 et débouchant radialement vers l'intérieur, c'est-à-dire vers l'axe A.

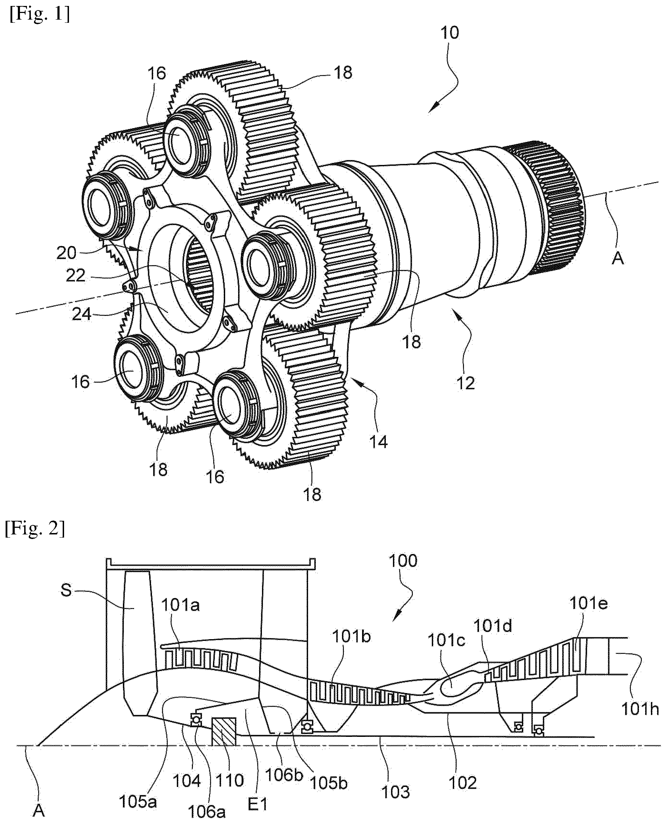

Des gicleurs de lubrifiant, portés par un stator du réducteur ou de la turbomachine, sont disposés radialement à l'intérieur du rouet (ils ne sont pas représentés dans la figure 1), et projettent du lubrifiant directement dans la gorge 24 du rouet, pour alimenter les moyens de lubrification.

Le lubrifiant est amené jusqu'aux gicleurs par une pompe d'un groupe de lubrification de la turbomachine, qui délivre un débit prédéterminé de lubrifiant aux gicleurs. Avec la technologie actuelle décrite ci-dessus, le lubrifiant projeté dans la gorge est acheminé jusqu'aux moyens de lubrification par effet centrifuge uniquement.

On connaît, par le document US-A1-2019/0301466, des rouets destinés à être associés à des gicleurs orientés dans des directions radiale et tangentielle. Ce type de rouet comprend une pluralité de cavités disposées autour d'un axe longitudinal et reliées à des ouvertures axiales et à des passages ayant une orientation circonférentielle vis-à-vis de cet axe.

Le rouet distribue donc de l'huile sous pression dans le réducteur en se servant des forces centrifuges générées en fonctionnement.

Cependant, la pression d'huile dans le rouet dépend de la hauteur de la colonne d'huile et de la vitesse de rotation du rouet. Une solution pour augmenter la pression d'huile consiste donc à augmenter la hauteur de la colonne d'huile en diminuant le diamètre intérieur du rouet. Cependant, l'intérieur du rouet est encombré par les gicleurs de lubrifiant dans la gorge du rouet. Par ailleurs, ces gicleurs de lubrifiant sont encombrants et risquent de venir au contact du premier arbre engrené avec le solaire du réducteur. La présente invention propose un perfectionnement à cette technologie, qui apporte une solution simple, efficace et économique au problème de lubrification d'un réducteur à train épicycloïdal.

### Résumé de l'invention

Conformément à l'invention, on parvient à cet objectif avec un ensemble pour une turbomachine d'aéronef, comprenant :
- un réducteur de vitesse à train épicycloïdal, et
- au moins un gicleur d'huile configuré pour projeter un jet d'huile parallèlement à un axe longitudinal de la turbomachine,

ledit réducteur comportant un porte-satellites équipé d'un rouet qui est destiné à être solidaire en rotation dudit porte-satellites et à être mis en rotation autour d'un axe A dudit réducteur, ledit rouet ayant une forme annulaire autour dudit axe et comportant des moyens de lubrification notamment de paliers de satellites dudit réducteur, lesdits moyens de lubrification comportant une cavité annulaire située à la périphérie interne dudit rouet, le rouet comportant une paroi périphérique interne de fermeture en direction radiale de ladite cavité, le rouet comprenant une lumière annulaire qui s'étend autour dudit axe et qui débouche en direction axiale dans ladite cavité en vue de son alimentation en huile de lubrification par ledit jet d'huile qui est destiné à traverser cette lumière,
caractérisé en ce que ladite cavité est délimitée axialement par deux parois latérales annulaires, une première de ces parois étant reliée à sa périphérie radialement interne à ladite paroi de fermeture, et la seconde de ces parois ayant sa périphérie radialement interne qui est espacée radialement d'une distance radiale R4 prédéterminée de ladite paroi de fermeture afin de définir ladite lumière, et en ce que ladite cavité comprend une surface tronconique interne qui est située axialement en regard de ladite lumière pour être impactée par ledit jet d'huile et qui a une dimension radiale R3, avec R4 inférieur à R3.

L'invention propose ainsi un ensemble de turbomachine dont le réducteur est équipé d'un rouet centrifuge à injection axiale, c'est-à-dire que de l'huile est amenée dans la cavité du rouet par projection de cette huile en direction axiale à travers la lumière du rouet. Cette huile se retrouve dans la cavité du rouet et est ensuite centrifugée pour alimenter les moyens de lubrification. Il n'est ainsi plus nécessaire de prévoir un gicleur ou autre à l'intérieur du rouet, ce qui évite d'encombrer l'intérieur du rouet et limite le risque d'interaction avec l'arbre qui est accouplé au solaire du réducteur.

La surface tronconique interne peut être complexe et a pour fonction de guider l'huile en la redirigeant radialement vers l'extérieur. La combinaison de cette surface avec l'ouverture de dimension radiale prédéterminée permet de guider au mieux l'huile en limitant les projections et les pertes au niveau du rouet, ce qui optimise l'alimentation en huile du réducteur et limite sa consommation en huile.

L'ensemble selon l'invention peut comprendre une ou plusieurs des caractéristiques suivantes, prises isolément les unes des autres, ou en combinaison les unes avec les autres :
- ladite seconde paroi est rapportée et fixée sur le reste du rouet ;
- R4 représente entre 5 et 20% de R3 ;
- ladite surface a une dimension axiale représentant entre 30 et 60% de la dimension axiale de ladite paroi de fermeture ;
- la dimension radiale R3 de ladite surface représente entre 20 et 50% de la dimension radiale d'au moins une desdites deux parois latérales ;
- la dimension radiale R4 de ladite lumière représente entre 2 et 20% de la dimension radiale d'au moins une desdites deux parois latérales ou de la dimension radiale de la cavité ;
- ladite surface tronconique est située à la jonction entre ladite première paroi et ladite paroi de fermeture ;
- lesdits moyens de lubrification comportent des canalisations d'huile principalement radiales débouchant dans ladite cavité ; de préférence, les extrémités radialement internes de ces canalisations débouchent dans la cavité ;
- au moins certaines des canalisations comprennent des extrémités radiales qui sont configurées pour être en communication fluidique avec des cavités internes de lubrification de paliers ; de préférence, les extrémités radialement externes de ces canalisations débouchent dans la cavité ;
- lesdites canalisations sont régulièrement réparties autour dudit axe ;
- au moins certaines desdites canalisations sont en communication fluidique avec des premières extrémités longitudinales de gicleurs de lubrifiant, qui sont montés en porte-à-faux à la périphérie externe du rouet ;
- le rouet comprend des bras sensiblement radiaux comportant ou portant à leurs extrémités, de préférence radialement externes, des moyens de support des axes des satellites, des canalisations étant formées dans ces bras.

La présente invention concerne également une turbomachine d'aéronef comportant ledit ensemble.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'un porte-satellites de la technique antérieure,
[Fig.2] La figure 2 représente schématiquement une coupe axiale d'une turbomachine utilisant l'invention ;
[Fig.3] La figure 3 présente une vue détaillée en coupe d'un réducteur à train épicycloïdal ;
[Fig.4] La figure 4 est une vue éclatée, en perspective, du réducteur de la figure 3 ;
[Fig.5] La figure 5 présente une coupe schématique d'un rouet du réducteur de la figure 3 ;
[Fig.6] la figure 6 est une vue schématique partielle en perspective et en coupe axiale d'un rouet selon un mode de réalisation de l'invention ; et
[Fig.7] la figure 7 est une vue à plus grande échelle d'un détail de la figure 6.

### Description détaillée de l'invention

La figure 1 a été décrite dans ce qui précède et représente la technique antérieure à la présente invention.

Les figures 2 à 5 illustrent également la technique antérieure telle que décrite dans le document FR-A1-3 041 054 de la Demanderesse.

La figure 1 montre une turbomachine 100 qui comporte, de manière classique, une hélice de soufflante S, un compresseur basse pression 101a, un compresseur haute pression 101b, une turbine haute pression 101d, une turbine basse pression 101e et une tuyère d'échappement 101h. Le compresseur haute pression 101b et la turbine haute pression 101d sont reliés par un arbre haute pression 102 et forment avec lui un corps haute pression (HP). Le compresseur basse pression 101a et la turbine basse pression 101e sont reliés par un arbre basse pression 103 et forment avec lui un corps basse pression (BP).

L'hélice de soufflante S est entraînée par un arbre de soufflante 104 qui est couplé à l'arbre BP 103 au moyen d'un réducteur 110 à train épicycloïdal représenté ici schématiquement.

Le réducteur 110 est positionné dans la partie amont de la turbomachine. Dans la présente demande, les termes « amont » et « aval » font référence à l'écoulement des gaz dans la turbomachine.

Une structure fixe comportant schématiquement, ici, une partie amont 105a et une partie aval 105b est agencée de manière à former une enceinte E1 entourant le réducteur 110. Cette enceinte E1 est ici fermée en amont par des joints au niveau d'un palier 106a permettant la traversée de l'arbre de soufflante 104, et en aval par des joints au niveau de la traversée 106b de l'arbre BP 103.

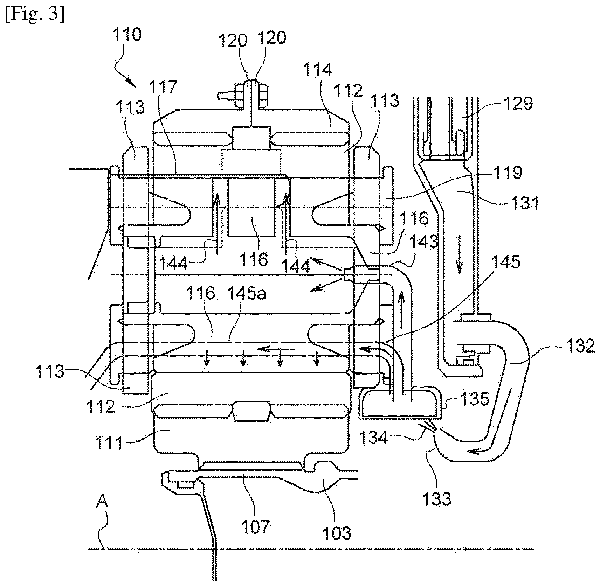

En référence aux figures 2 et 3, le réducteur est enfermé dans une couronne 114 qui est fixée par l'intermédiaire d'un carter de support 120 à ladite structure fixe 105a, 105b avec des moyens souples agencés pour lui permettre de suivre les mouvements éventuels de l'arbre de soufflante 104, dans certains cas de fonctionnement dégradés par exemple. Ces moyens de fixation sont connus de l'homme du métier et ne sont pas détaillés ici. Une brève description peut en être trouvée par exemple dans le document FR-A1-2 987 416.

Le réducteur 110 de l'exemple considéré embraye d'une part sur l'arbre BP 103 par l'intermédiaire de cannelures 107 qui entraînent un pignon d'engrenage planétaire 111, et d'autre part sur l'arbre de soufflante 104 qui est attaché à un porte-satellites 113. Classiquement, le pignon planétaire 111, dont l'axe de rotation A est confondu avec celui de la turbomachine, entraîne une série de pignons de satellites 112, qui sont répartis régulièrement sur la circonférence du réducteur 110. Le nombre de satellites 112 est généralement défini entre trois et six. Les pignons de satellites 112 tournent aussi autour de l'axe A de la turbomachine, en engrenant sur des dents internes de la couronne 114, qui est montée fixe par rapport à la turbomachine, par l'intermédiaire du carter de support 120. Chacun des satellites 112 tourne librement autour d'un axe de satellite 116 relié au porte-satellite 113, à l'aide d'un palier qui peut être lisse, comme représenté sur la figure 3, ou un palier à éléments roulants (roulements à billes ou à rouleaux). La rotation des satellites 112 autour de leur axe de satellite 116, du fait de la coopération de leurs pignons avec les dents de la couronne 114, entraîne la rotation du porte-satellites 113 autour de l'axe A, et par conséquent celle de l'arbre de soufflante 104 qui lui est lié, à une vitesse de rotation qui est inférieure à celle de l'arbre BP 103.

L'entraînement de l'arbre de soufflante 104 par le porte-satellites 113 est assuré par une série de doigts de centrage 117, répartis régulièrement sur la circonférence du réducteur 110, qui s'étendent axialement de l'extrémité aval de l'arbre de soufflante 104 et qui s'enfoncent dans des alésages pratiqués dans le porte-satellites 113. Le porte-satellites 113 s'étend symétriquement de part et d'autre des axes de satellite 116 et forme une enceinte dans laquelle pourra être mise en oeuvre une fonction de lubrification des engrenages. Des douilles 119 de fermeture, aux extrémités des axes de satellites 116, permettent de fermer cette enceinte au niveau des paliers des satellites 112.

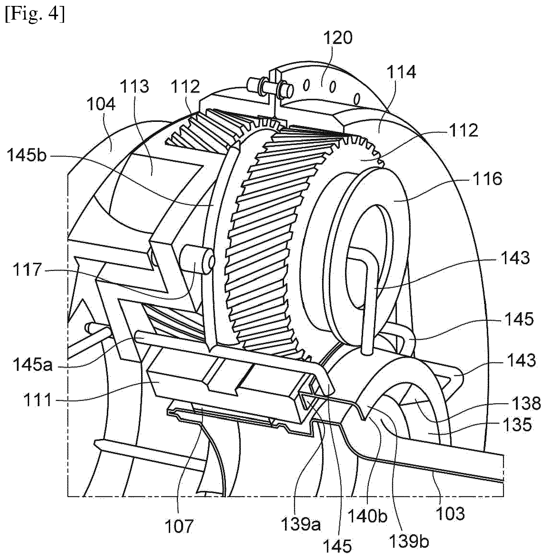

La figure 3 montre, avec la figure 4, l'acheminement de l'huile vers le réducteur 110 et son cheminement à l'intérieur de celui-ci. Des flèches montrent sur la figure 3 le cheminement suivi par l'huile depuis, sur cet exemple, un réservoir tampon 131 lié à la structure fixe de la turbomachine, jusqu'aux pignons et aux paliers à lubrifier. Le dispositif de lubrification comporte schématiquement trois parties qui vont être décrites ci après successivement, une première partie liée à la structure fixe et délivrant l'huile vers les parties tournantes du réducteur 110, un rouet tournant avec le porte-satellites 113 réceptionnant cette huile, et des circuits de distribution d'huile alimentés en huile par le rouet pour l'acheminer vers les endroits à lubrifier. La première partie comporte au moins un injecteur 132 dont l'extrémité calibrée est resserrée pour former un gicleur 133. L'huile est amenée vers l'injecteur par une canalisation d'acheminement 129, en provenance du réservoir du moteur (non représenté). Un réservoir tampon 131 peut être interposé à côté du réducteur 110 sur la canalisation, de préférence en partie haute de façon à ce que l'huile puisse s'écouler vers le centre du réducteur par gravité. Le gicleur 133 éjecte l'huile sous la forme d'un jet 134, qui se forme sous la pression produite conjointement par la pompe d'alimentation (non représentée) et par le poids de la colonne d'huile située au-dessus de lui. Le gicleur 133 est positionné ici radialement à l'intérieur du porte-satellites 113 par rapport à l'axe A et le jet 134 est orienté avec une composante radiale dirigée vers l'extérieur du réducteur 110.

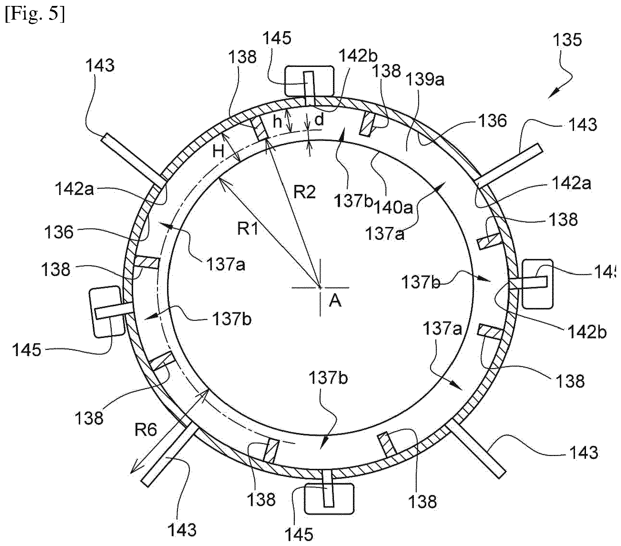

En référence aux figures 4 et 5, le rouet 130 de réception de l'huile lié au porte-satellites 113 comporte essentiellement une coupelle cylindrique 135, ici à section radiale en U, dont l'ouverture en U est orientée en direction de l'axe de rotation A. Le rouet 130 est agencé sur le porte-satellites 113 de manière à ce que le fond 136 du U de la coupelle 135 recueille le jet d'huile 134 éjecté par le gicleur 133.

Selon l'invention, la coupelle 135 du rouet 130 est ici divisée en une succession circonférentielle de cuvettes 137a, 137b séparées par des parois 138 orientées radialement et s'étendant axialement entre les deux parois latérales 139a, 139b du U formé par la coupelle 135. Sur l'exemple présenté, les parois de séparation circonférentielle 138 délimitent deux séries alternées de quatre cuvettes 137a, 137b, avec une extension circonférentielle identique dans une série mais différente d'une série à l'autre.

Par centrifugation, lorsque le rouet 130 tourne avec le porte-satellites 113, l'huile réceptionnée sur le fond 136 de la coupelle 135 est entraînée en rotation et mise en pression entre le fond 136 et les parois latérales 139a, 139b de la coupelle 135. Chaque cuvette 135a, 135b, en passant successivement devant le gicleur 133 au cours de la rotation, recueille une quantité d'huile proportionnelle à son extension circonférentielle. En effet, les bords radialement intérieurs des parois 139a-139b-138 d'une cuvette 137a, 137b définissent une surface d'entrée de la cuvette selon la direction radiale. Cette huile reste confinée entre les parois 138, 139a, 139b de la cuvette 137a, 137b tant que le niveau d'huile par rapport au fond 136 reste inférieur à la hauteur minimale h des parois 138 de celle-ci par rapport au fond 136. Les bords radiaux internes 140a, 140b des parois latérales 139a, 139b sont sensiblement circulaires. Leur rayon R1 définit une profondeur générale H de la coupelle 135 par rapport au fond 136. De préférence, les parois de séparation circonférentielle 138 ont un bord radial interne 141 situé à une distance R2 de l'axe A légèrement supérieure au rayon R1 des bords internes 140a, 140b des parois latérales 139a, 139b. La hauteur h des parois 138 de séparation circonférentielle par rapport au fond 136 des cuvettes 137a, 137b est donc légèrement inférieure à la hauteur H des parois latérales 139a, 139b par rapport à ce même fond 136.

Par ailleurs le fond 136 de chaque cuvette 137a, 137b comporte une ouverture 142a, 142b qui communique avec une canalisation 143, 145 d'un circuit de distribution d'huile installé sur le porte-satellites 113.

En référence aux figures 4 et 5, les circuits de distribution d'huile sont ici de deux types. Une première série de circuits de distribution d'huile correspond à des premières canalisations 143, qui sont réparties régulièrement sur la circonférence du réducteur 110 et en nombre égal à celui des satellites 112. Ces canalisations 143 partent radialement de l'ouverture 142a du fond de la première série de cuvettes 137a et pénètrent dans l'enceinte interne de chaque arbre de satellite 116, qui est refermée par le porte-satellites 113. L'huile qui circule dans les premières canalisations 143 pénètre dans la cavité interne de chaque axe de satellite 116 puis passe, du fait de la force centrifuge, dans des canaux de guidage 144, qui traversent ces axes de satellite 116 en étant orientés radialement. Ces canaux 144 débouchent à la périphérie des axes de satellites 116, au niveau des paliers supportant les pignons des satellites 112 et assurent ainsi la lubrification de ces paliers (figure 3).

La deuxième série de circuits de distribution d'huile comprend des secondes canalisations 145 qui cheminent, depuis les ouvertures 142b du fond des cuvettes 137b de la deuxième série de cuvettes entre les satellites 112 et se divisent en plusieurs canaux 145a, 145b. Les canaux 145a, 145b acheminent l'huile vers les engrenages formés par les pignons des satellites 112 et le pignon planétaire 111, d'une part, et les pignons des satellites 112 et la couronne externe 114, d'autre part. Chaque canal 145a s'étend axialement le long des pignons d'un satellite 112, entre ceux-ci et le planétaire 111, et forme une rampe de lubrification sur toute la largeur des pignons. Le canal 145b, qui alimente l'engrenage entre la couronne 114 et les pignons des satellites 112, projette son huile au centre du cylindre formé par chaque satellite 112. Comme représenté, chaque satellite 112 est réalisé sous la forme de deux pignons parallèles. Leur denture est orientée en diagonale par rapport à l'axe de rotation du satellite 112, de façon à leur donner une fonction de rainures dans lesquelles l'huile est entraînée, depuis le milieu du cylindre jusqu'à sa périphérie, pour lubrifier l'engrenage sur toute sa largeur.

Sur cet exemple, les premiers circuits de distribution d'huile 143-144 qui lubrifient les paliers supportant les satellites ont besoin d'acheminer un débit d'huile plus important que les deuxièmes circuits 145-145a-145b. Pour cette raison, l'extension circonférentielle des cuvettes 137a de la première série, qui leur correspondent, est plus importante que celle des cuvettes 137b de la deuxième série. Ici, un rapport de deux tiers à un tiers est recherché dans le débit d'huile en fonctionnement nominal ; l'extension circonférentielle des deux séries de cuvettes 137a, 137b reprend sensiblement ce rapport. L'ensemble a ici été présenté en se référant à une architecture de réducteur 110 à quatre satellites 112 avec deux séries de circuits de distribution d'huile 143-144, 145-145a-145b de types différents. Pour d'autres architectures de réducteurs, le nombre de cuvettes par série peut être différent. De même le nombre de séries de cuvettes ayant des extensions circonférentielles semblables peut être différent, suivant les types de circuits de distribution d'huile. Par exemple, les deuxièmes circuits de distribution d'huile pourraient être subdivisés en deux, l'un dédié à l'engrenage des pignons des satellites 112 avec le planétaire 111 et l'autre dédié à l'engrenage avec la couronne 114. Dans ce cas, une variante de réalisation du rouet de récupération d'huile est envisageable avec trois séries de cuvettes d'extensions circonférentielles différentes.

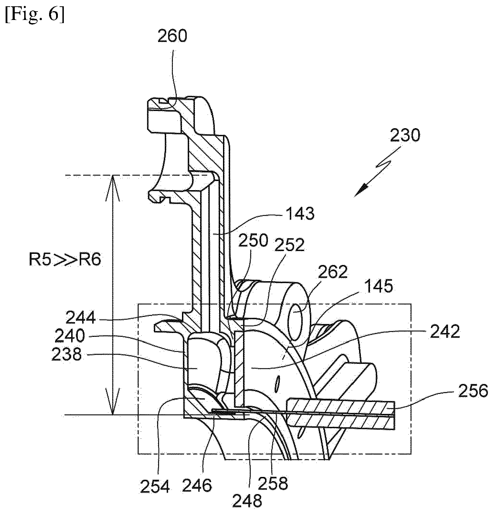

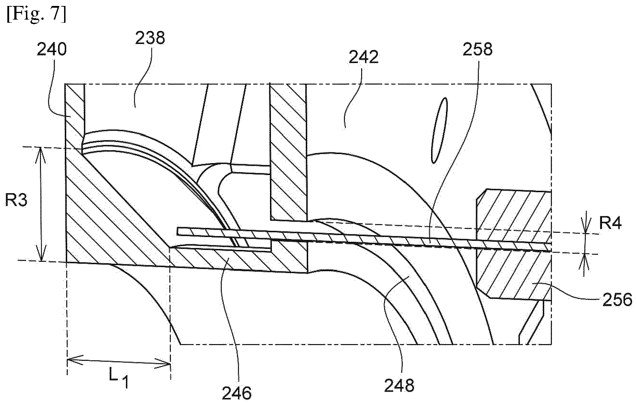

Les figures 6 et 7 illustrent un mode de réalisation d'un rouet 230 selon l'invention.

Le rouet 230 comprend des caractéristiques décrites dans ce qui précède et qui sont désignées par les mêmes références aux figures 3 à 5. Il s'agit notamment des canalisations 143 et des canalisations 145

Le rouet 230 a une forme générale annulaire autour de l'axe A précité qui n'est pas visible aux figures 6 et 7. Dans l'exemple représenté, le rouet 230 peut être formé d'une seule pièce ou résulter de l'assemblage d'au moins deux pièces.

Le rouet 230 comprend des moyens de support des axes 116 de rotation des satellites du réducteur, ces moyens de support étant formés par des rebords 260 cylindriques engagés dans des cavités internes de ces axes. Le rouet 230 comporte en outre des moyens de lubrification de dentures des satellites et des paliers des axes 116, qui comportent notamment les canalisations 143, 145 précitées.

Les moyens de lubrification comportent en outre une cavité annulaire 238 située à la périphérie interne du rouet 230 et reliée aux canalisations 143, 145. Les canalisations 143 s'étendent sensiblement radialement entre la cavité 238 et les axes 116 en vue de leur alimentation en huile. Les canalisations 145 s'étendent sensiblement radialement entre la cavité et des orifices 262 de montage de gicleurs (figure 6) ou des canaux 145a, 145b tels que ceux décrits dans ce qui précède en relation avec les figures 3 à 5.

La cavité 238 annulaire est délimitée par deux parois annulaires latérales 240, 242, une paroi périphérique externe de fond 244, et une paroi périphérique interne de fermeture 246.

Les parois 240, 242 s'étendent radialement entre les parois 244, 246. Les extrémités radialement internes des canalisations 143, 145 débouchent sur la paroi 244.

Contrairement à la technique antérieure où l'alimentation du rouet 130 est centrifuge, la cavité 238 du rouet 230 est ici fermée radialement à l'intérieur par la paroi 246 qui s'étend axialement entre les parois 240, 242. La paroi 246 est reliée à la paroi 240 et s'étend radialement à l'intérieur de la paroi 242, à distance radiale de celle-ci. La périphérie interne de la paroi 242 et la paroi 246 définissent ainsi entre elles une lumière annulaire 248 d'alimentation en huile de lubrification de la cavité 238.

Comme évoqué dans ce qui précède, le rouet 230 peut être formé d'une seule pièce. Dans l'exemple représenté, la paroi 242 peut être rapportée et fixée sur le reste du rouet 230. La périphérie externe de la paroi 242 est par exemple appliquée axialement contre un épaulement cylindrique 250 de la paroi 244 et engagée dans un rebord cylindrique de centrage 252 de cette paroi 244.

La cavité 238 comprend une surface tronconique interne 254 qui est située en regard de la lumière 248. Cette surface 254 est située à la jonction entre les parois 240, 246. Son extrémité de plus grand diamètre est située sur la paroi 240 et son extrémité de plus petit diamètre est située sur la paroi 246. La surface 254 peut avoir une dimension axiale L1 représentant entre 30 et 60% de la dimension axiale de la paroi 246. La surface 254 peut avoir une dimension radiale R3 représentant entre 20 et 50% de la dimension radiale de la paroi 240. Par ailleurs, la lumière 248 a une distance radiale R4 représentant entre 2 et 20% de la dimension radiale de la paroi 242 ou de la cavité 238, et/ou entre 5 et 20% de la dimension radiale de la surface 254. Le double trait des figures 6 et 7 illustrent un jet d'huile 258 projeté par un gicleur 256 fixé à un stator de la turbomachine.

Le gicleur 256 est orienté parallèlement à l'axe A (non visible) et projette le jet d'huile 258 dans la cavité 238, à travers la lumière 248. Ce jet d'huile 258 impacte la surface 254.

De manière générale, un rouet de réducteur distribue de l'huile à ce réducteur en se servant des forces centrifuges générées par le porte-satellites qui porte ce rouet. La pression d'huile dans le rouet dépend de la hauteur ou dimension radiale de la colonne d'huile disponible dans le rouet ainsi que de la vitesse de rotation du rouet et du porte-satellites. La hauteur de la colonne d'huile est ici augmentée en diminuant le diamètre interne du rouet, qui n'est pas limité par la présence du gicleur 256. Dans l'exemple représenté, la colonne d'huile du rouet a une hauteur ou dimension radiale R5 qui est nettement supérieure à la hauteur R6 de colonne d'huile de la technique antérieure (figures 5 et 6). La dimension R5 est ici mesurée entre la paroi 246 et les extrémités radialement externes des canalisations 143. L'huile injectée axialement à l'intérieur de la cavité 238 est déviée radialement vers l'extérieur par la surface 254 qui sert de déflecteur.

Dans le cas où le rouet serait réalisé d'une seule pièce, il pourrait être réalisé par fabrication additive. Dans le cas précité où la paroi 242 serait rapportée et fixée, cette paroi 242 pourrait être soudée sur le reste du rouet.

Les gains apportés par le rouet à lubrification axiale sont notamment :
- un encombrement radial réduit de la technologie,
- une augmentation de la pression d'huile dans le rouet (environ +10% d'augmentation au décollage, c'est-à-dire à la vitesse maximale du rouet, dans un cas particulier de réalisation de ce rouet), et
- une meilleure captation de l'huile à faible désalignement (possibilité de diminuer le débit et la quantité d'huile nécessaire au rouet) ; une fois rentrée, l'huile peut être piégée grâce à la faible dimension radiale de la lumière 248 qui est située à la périphérie interne du rouet.

## Revendications

1. Ensemble pour une turbomachine d'aéronef, comprenant :
- un réducteur de vitesse (110) à train épicycloïdal, et
- au moins un gicleur d'huile (256) configuré pour projeter un jet d'huile (258) parallèlement à un axe longitudinal (A) de la turbomachine,
ledit réducteur comportant un porte-satellites (113) équipé d'un rouet (230) qui est destiné à être solidaire en rotation dudit porte-satellites et à être mis en rotation autour d'un axe dudit réducteur, ledit rouet ayant une forme annulaire autour dudit axe et comportant des moyens de lubrification (143, 145, 238) notamment de paliers de satellites dudit réducteur, lesdits moyens de lubrification comportant une cavité (238) annulaire située à la périphérie interne dudit rouet, le rouet comportant une paroi périphérique interne (246) de fermeture en direction radiale de ladite cavité (238), le rouet comprenant une lumière (248) annulaire qui s'étend autour dudit axe et qui débouche en direction axiale dans ladite cavité (238) en vue de son alimentation en huile de lubrification par ledit jet d'huile qui est destiné à traverser cette lumière (248),
ladite cavité (238) étant délimitée axialement par deux parois latérales (240, 242) annulaires, une première (240) de ces parois étant reliée à sa périphérie radialement interne à ladite paroi de fermeture (246), et la seconde (242) de ces parois ayant sa périphérie radialement interne qui est espacée radialement d'une distance radiale (R4) prédéterminée de ladite paroi de fermeture afin de définir ladite lumière (248), et ladite cavité (238) comprenant une surface tronconique interne (254) qui est située axialement en regard de ladite lumière (248) pour être impactée par ledit jet d'huile et qui a une dimension radiale (R3), ladite distance radiale (R4) étant inférieure à ladite dimension radiale (R3).

2. Ensemble selon la revendication précédente, dans lequel ladite seconde paroi (242) est rapportée et fixée sur le reste du rouet.

3. Ensemble selon l'une des revendications précédentes, dans lequel ladite distance radiale (R4) représente entre 5 et 20% de ladite dimension radiale (R3).

4. Ensemble selon l'une des revendications précédentes, dans lequel ladite surface tronconique interne (254) a une dimension axiale (L1) représentant entre 30 et 60% de la dimension axiale de ladite paroi de fermeture (246).

5. Ensemble selon l'une des revendications précédentes, dans lequel la dimension radiale (R3) de ladite surface tronconique interne (254) représente entre 20 et 50% de la dimension radiale d'au moins une desdites deux parois latérales (240).

6. Ensemble selon l'une des revendications précédentes, dans lequel ladite distance radiale (R4) de ladite lumière représente entre 2 et 20% d'une dimension radiale d'au moins une desdites deux parois latérales (242) ou d'une dimension radiale de la cavité (238),

7. Ensemble selon l'une des revendications précédentes, dans lequel ladite surface tronconique (254) est située à la jonction entre ladite première paroi (240) et ladite paroi de fermeture (246).

8. Ensemble selon l'une des revendications précédentes, dans lequel lesdits moyens de lubrification (143, 145, 238) comportent des canalisations d'huile (143, 145) principalement radiales débouchant dans ladite cavité (238).

9. Ensemble selon la revendication précédente, dans lequel au moins certaines des canalisations (143) comprennent des extrémités radiales configurées pour être en communication fluidique avec des cavités internes de lubrification de paliers.

10. Ensemble selon la revendication 8 ou 9, dans lequel lesdites canalisations (143, 145) sont régulièrement réparties autour dudit axe (A).

11. Ensemble selon l'une des revendications 8 à 10, dans lequel au moins certaines desdites canalisations sont en communication fluidique avec des premières extrémités longitudinales de gicleurs de lubrifiant, qui sont montés en porte-à-faux à la périphérie externe du rouet.

12. Ensemble selon l'une des revendications 8 à 11, dans lequel le rouet comprend des bras sensiblement radiaux comportant ou portant à leurs extrémités, de préférence radialement externes, des moyens de support des axes des satellites, des canalisations étant formées dans ces bras.

13. Turbomachine d'aéronef, comportant un ensemble selon l'une des revendications précédentes.

## Patentansprüche

1. Anordnung für eine Turbomaschine eines Luftfahrzeugs, umfassend:
- ein Untersetzungsgetriebe (110) mit Planetengetriebe, und
- mindestens eine Öldüse (256), die konfiguriert ist, um einen Ölstrahl (258) parallel zu einer länglichen Achse (A) der Turbomaschine auszustoßen,
wobei das Untersetzungsgetriebe einen Planetenträger (113) aufweist, der mit einem Laufrad (230) ausgestattet ist, das dazu bestimmt ist, drehfest mit dem Planetenträger verbunden zu sein und um eine Achse des Untersetzungsgetriebes in Drehung versetzt zu werden, wobei das Laufrad eine ringförmige Form um die Achse herum aufweist und Mittel (143, 145, 238) zum Schmieren insbesondere für Planetenradlager des Untersetzungsgetriebes aufweist, wobei die Mittel zum Schmieren einen ringförmigen Hohlraum (238) aufweisen, der sich am inneren Umfang des Laufrads befindet, wobei das Laufrad eine innere Umfangswand (246) zum Verschließen des Hohlraums (238) in radialer Richtung aufweist, wobei das Laufrad einen ringförmigen Schlitz (248) umfasst, der sich um die Achse erstreckt und in axialer Richtung in den Hohlraum (238) mündet, um ihn mit Schmieröl durch den Ölstrahl zu versorgen, der dazu bestimmt ist, diesen Schlitz (248) zu durchqueren,
wobei der Hohlraum (238) axial durch zwei ringförmige Seitenwände (240, 242) begrenzt ist, wobei eine erste (240) dieser Wände an ihrem radial inneren Umfang mit der Verschlusswand (246) verbunden ist und die zweite (242) dieser Wände ihren radial inneren Umfang aufweist, der radial um einen vorbestimmten radialen Abstand (R4) von der Verschlusswand beabstandet ist, um den Schlitz (248) zu definieren, und wobei der Hohlraum (238) eine innere kegelstumpfförmige Oberfläche (254) umfasst, die axial gegenüber dem Schlitz (248) angeordnet ist, um von dem Ölstrahl getroffen zu werden, und die eine radiale Abmessung (R3) aufweist, wobei der radiale Abstand (R4) kleiner als die radiale Abmessung (R3) ist.

2. Anordnung nach dem vorstehenden Anspruch, wobei die zweite Wand (242) auf den Rest des Laufrads aufgesetzt und daran befestigt ist.

3. Anordnung nach einem der vorstehenden Ansprüche, wobei der radiale Abstand (R4) zwischen 5 und 20 % der radialen Abmessung (R3) beträgt.

4. Anordnung nach einem der vorstehenden Ansprüche, wobei die innere kegelstumpfförmige Oberfläche (254) eine axiale Abmessung (L1) aufweist, die zwischen 30 und 60 % der axialen Abmessung der Verschlusswand (246) darstellt.

5. Anordnung nach einem der vorstehenden Ansprüche, wobei die radiale Abmessung (R3) der inneren kegelstumpfförmigen Oberfläche (254) zwischen 20 und 50 % der radialen Abmessung von mindestens einer der beiden Seitenwände (240) darstellt.

6. Anordnung nach einem der vorstehenden Ansprüche, wobei der radiale Abstand (R4) des Schlitzes zwischen 2 und 20 % einer radialen Abmessung von mindestens einer der beiden Seitenwände (242) oder einer radialen Abmessung des Hohlraums (238) darstellt,

7. Anordnung nach einem der vorstehenden Ansprüche, wobei die kegelstumpfförmige Oberfläche (254) an der Verbindungsstelle zwischen der ersten Wand (240) und der Verschlusswand (246) angeordnet ist.

8. Anordnung nach einem der vorstehenden Ansprüche, wobei die Mittel (143, 145, 238) zum Schmieren hauptsächlich radiale Ölleitungen (143, 145) aufweisen, die in den Hohlraum (238) münden.

9. Anordnung nach dem vorstehenden Anspruch, wobei mindestens einige der Leitungen (143) radiale Enden umfassen, die konfiguriert sind, um in Fluidverbindung mit inneren Hohlräumen zur Lagerschmierung zu stehen.

10. Anordnung nach Anspruch 8 oder 9, wobei die Leitungen (143, 145) gleichmäßig um die Achse (A) verteilt sind.

11. Anordnung nach einem der Ansprüche 8 bis 10, wobei mindestens einige der Leitungen in Fluidverbindung mit ersten länglichen Enden von Schmiermitteldüsen stehen, die freitragend am äußeren Umfang des Laufrads gelagert sind.

12. Anordnung nach einem der Ansprüche 8 bis 11, wobei das Laufrad im Wesentlichen radiale Arme umfasst, die an ihren vorzugsweise radial äußeren Enden Mittel zum Stützen der Achsen der Planeten aufweisen oder tragen, wobei in diesen Armen Leitungen gebildet sind.

13. Turbomaschine eines Luftfahrzeugs, die eine Anordnung nach einem der vorstehenden Ansprüche aufweist.

## Claims

1. An assembly for an aircraft turbine engine, comprising:
- an epicyclic speed reduction gear (110), and
- at least one oil nozzle (256) configured to project an oil jet (258) parallel to a longitudinal axis (A) of the turbine engine,
said reduction gear comprising a planet carrier (113) equipped with an impeller (230) which is intended to be fixed in rotation to said planet carrier and to be rotated about an axis of said reduction gear, said impeller having an annular shape about said axis and comprising means (143, 145, 238) for lubricating in particular planet gear bearings of said reduction gear, said lubricating means comprising an annular cavity (238) located at the inner periphery of said impeller, the impeller comprising an inner peripheral wall (246) for closing said cavity (238) in the radial direction, the impeller comprising an annular aperture (248) which extends around said axis and which opens in the axial direction into said cavity (238) in order to be supplied with lubricating oil by said oil jet which is intended to pass through this aperture (248),
said cavity (238) being axially bounded by two annular side walls (240, 242), a first (240) of these walls being connected at its radially inner periphery to said closing wall (246), and the second (242) of these walls having its radially inner periphery radially spaced from said closing wall by a predetermined radial distance (R4) to define said aperture (248), and said cavity (238) comprising an inner frustoconical surface (254) which is located axially opposite said aperture (248) to be impacted by said oil jet and which has a radial dimension (R3), said radial distance (R4) being less than the radial dimension (R3).

2. The assembly according to the preceding claim, wherein said second wall (242) is mounted and fixed to the rest of the impeller.

3. The assembly according to one of the preceding claims, wherein said radial distance (R4) represents between 5 and 20% of said radial dimension (R3).

4. The assembly according to one of the preceding claims, wherein said inner frustoconical surface (254) has an axial dimension (L1) representing between 30 and 60% of the axial dimension of said closing wall (246).

5. The assembly according to one of the preceding claims, wherein the radial dimension R3 of said inner frustoconical surface (254) represents between 20 and 50% of the radial dimension of at least one of said two side walls (240).

6. The assembly according to one of the preceding claims, wherein the radial distance (R4) of said aperture represents between 2 and 20% of a radial dimension of at least one of said two side walls (242) or of a radial dimension of the cavity (238),

7. The assembly according to one of the preceding claims, wherein said frustoconical surface (254) is located at the junction between said first wall (240) and said closing wall (246).

8. The assembly according to one of the preceding claims, wherein said lubricating means (143, 145, 238) comprise oil pipes (143, 145), mainly radial, and opening into said cavity (238).

9. The assembly according to the preceding claim, wherein at least some of the pipes (143) comprise radial ends configured to be in fluid communication with internal cavities for lubricating bearings.

10. The assembly according to claim 8 or 9, wherein said pipes (143, 145) are evenly distributed about said axis (A).

11. The assembly according to one of claims 8 to 10, wherein at least some of said pipes are in fluid communication with the first longitudinal ends of lubricant nozzles, which are cantilevered at the outer periphery of the impeller.

12. The assembly according to one of claims 8 to 11, wherein the impeller comprises substantially radial arms comprising or carrying at their preferably radially outer ends means for supporting the axles of the planet gear, pipes being formed in these arms.

13. Aircraft turbine engine, comprising an assembly according to one of the preceding claims.
